# EUROPÄISCHE PATENTSCHRIFT

(11) **EP 2 034 191 B1**
(45) Veröffentlichungstag und Bekanntmachung des Hinweises auf die Patenterteilung: **14.11.2012**
(21) Anmeldenummer: 08162880.2
(22) Anmeldetag: 25.08.2008
(51) Int. Cl.: F15B 15/28, F16F 9/32

(54) **Sensorhalterung für ein Kolben-Zylinderaggregat**
Sensor holder for a piston cylinder device
Fixation de capteur pour un agrégat de cylindre à piston

(30) Priorität: 10.09.2007 DE 102007042849
(43) Veröffentlichungstag der Anmeldung: 11.03.2009
(73) Patentinhaber: ZF Friedrichshafen AG, 88038 Friedrichshafen (DE)
(72) Erfinder: Memmel, Alfred, 97453 Schonungen (DE); Nowotka, Thomas, 97539 Wonfurt (DE)

(56) Entgegenhaltungen:
- WO-A1-03/093682
- DE-A1- 2 553 454
- DE-A1-102004 038 691

## Beschreibung

Die Erfindung betrifft eine Sensorhalterung für ein Kolben-Zylinderaggregat gemäß dem Oberbegriff von Patentanspruch 1.

Aus der DE 10 2004 038 691 A1 ist ein Kolben-Zylinderaggregat mit einem PositionsMess-System bekannt, bei dem eine zylinderseitige Positionsmesseinrichtung und eine außerhalb und achsparallel zur Kolbenstange verlaufende Positionsmesseinrichtung zur Anwendung kommt, die in Kombination ein Wegsignal bilden. Die zylinderseitige Positionsmesseinrichtung ist in einer kappenförmigen Halterung fixiert, die Führungsflächen für die achsparallele Positionsmesseinrichtung innerhalb eines Schutzrohres aufweist. Über die Führungsflächen wird eine drehorientierte Einbaulage des Schutzrohres zum Zylinder und damit der beiden Positionsmesseinrichtungen erreicht. Diese an sich gute Lösung bringt jedoch den Nachteil mit sich, dass das Schutzrohr über die Führungsflächen in Reibkontakt mit der Halterung steht, wobei Schmutz und Feuchtigkeit die Randbedingungen noch verschlechtern können. Des Weiteren muss das Schutzrohr auch in Längsrichtung präzise zum Zylinderrohr ausgerichtet sein, da ein Schiefstand ebenfalls Klemmkräfte innerhalb der Positionsmesseinrichtung fördert.

Bei der Montage tritt das Problem auf, dass das Schutzrohr in Umfangsrichtung drehorientiert auf den Zylinder aufgefädelt werden muss. Diese lageorientierte Montage erschwert die Handhabung des Schutzrohres innerhalb der Fertigungseinrichtungen.

Aus der WO03/093682 A1 ist ein Kolben-Zylinderaggregat mit einer Sensorhalterung bekannt. Das Kolben-Zylinderaggregat umfasst einen Zylinder und einer dazu beweglichen Kolbenstange, wobei der Zylinder eine erste Positionsmesseinrichtung trägt. Eine zweite Positionsmesseinrichtung wird über eine Halterung axial ortsfest zum Zylinder gehalten. Die zweite Positionsmesseinrichtung ist axial gleitend am Zylinder angeordnet und weist magnetische Eigenschaften auf, die mit mindestens einem kolbenseitigen Magnetfeder unterschiedlicher Polung zusammenwirkt, so dass die sich anziehenden Magnetkräfte eine axiale Fixierung der zweiten Positionsmesseinrichtung bewirken.

Die Aufgabe der vorliegenden Erfindung besteht darin, eine Sensorhalterung bereitzustellen, bei der die aus dem Stand der Technik bekannten Probleme behoben sind.

Erfindungsgemäß wird die Aufgabe durch die Merkmale des Patentanspruchs 1 gelöst.

Der große Vorteil der Erfindung besteht darin, dass zwischen der zweiten Positionsmesseinrichtung und dem Zylinder abgesehen von den Magnetenkräften keine Verbindung besteht. Folglich muss man bei der Montage auf keine Führungsflächen Rücksicht nehmen. Des Weiteren können keine Klemmkräfte innerhalb des gesamten Positionsmess-Systems auftreten, da eine eventuelle Desachsierung des Halteelements keine Auswirkungen auf die räumliche Verbindung zwischen den beiden Positionsmesseinrichtungen ausübt.

Der Deckel des Schutzrohres ermöglicht die nachträgliche Montage, wenn das Schutzrohr schon über den Zylinder gefädelt ist. Das Schutzrohr selbst verhindert eine Verschmutzung der Positionsmesseinrichtung.

In weiterer vorteilhafter Ausgestaltung ist axial versetzt zu dem zylinderseitigen Magnetfeld mit unterschiedlicher Polung zu dem Magnetfeld der zweiten Positionsmesseinrichtung mindestens ein weiteres zylinderseitiges Magnetfeld mit gleicher Polung wie das Magnetfeld der zweiten Positionsmesseinrichtung angeordnet. Der Sinn dieser Maßnahme besteht darin, dass extreme Beschleunigungen, die auf die axial bewegliche zweite Positionsmesseinrichtungen einwirken nicht dazu führen sollen, dass die zweite Positionsmesseinrichtung aus dem zylinderseitigen Magnetfeld herausdriftet und unwiederbringlich verschoben bleibt. Die Abstoßungskräfte des mindestens einen weiteren zylinderseitigen Magnetfelds mit gleichartiger Polung stützen die zweite Positionsmesseinrichtung in ihrer vorbestimmten Lage.

Um eine drehorientierte Montage des Halteelements zum Zylinder zu umgehen, wird das zylinderseitige Magnetfeld von mindestens einem Ring erzeugt.

Gemäß einem weiteren vorteilhaften Unteranspruch weist das Halteelement für die erste Positionsmesseinrichtung einen axialen Anschlag für die zweite Positionsmesseinrichtung aufweist. Der axiale Anschlag dient u. a. dazu, dass die zweite Positionsmesseinrichtung bei der Montage über das zylinderseitige Magnetfeld mit gleicher Polung geschoben werden kann.

Eine besonders einfache Lösung besteht darin, dass sich der Deckel axial parallel zum Kanal für die zweite Positionsmesseinrichtung erstreckt, insbesondere, wenn der Deckel an einer äußeren Mantelfläche des Schutzrohres ausgeführt ist.

Anhand der folgenden Figurenbeschreibung soll die Erfindung näher erläutert werden.

Es zeigt:

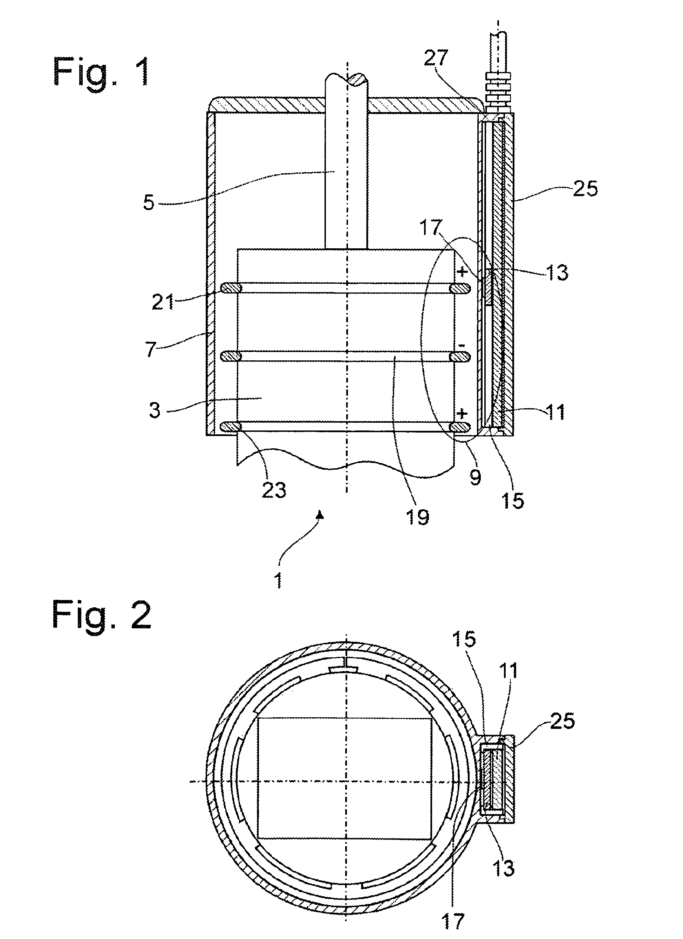

Die Fig. 1 zeigt einen Ausschnitt von einem Kolben-Zylinderaggregat 1 mit einem Zylinder 3 und einer darin axial beweglichen Kolbenstange 5. Die Kolbenstange 5 wird von einem starren Schutzrohr 7 eingehüllt. Das Kolben-Zylinderaggregat 1 verfügt über ein Positionsmess-System 9, das zwei axial zueinander bewegliche Positionsmesseinrichtungen 11; 13 umfasst. Eine erste Positionsmesseinrichtung 11 ist ortsfest zu der Kolbenstange 5 innerhalb des Schutzrohres angeordnet, so dass das Schutzrohr 7 als Halteelement für die erste Positionsmesseinrichtung dient.

Eine zweite Positionsmesseinrichtung 13 ist axial gleitend ebenfalls in dem Schutzrohr 7 angeordnet, wobei das Schutzrohr zu deren Aufnahme einen geschlossenen Kanal 15 aufweist. Auf der Mantelfläche des Zylinders 3 ist ein erster Ring 19 mit magnetischen Eigenschaften fixiert. Auch die zweite Positionsmesseinrichtung verfügt über magnetische Eigenschaften, z. B. mittels eines Permanentmagneten 17, wobei sich die Polaritäten der Magnetfelder unterscheiden, so dass zwischen dem ersten Ring 19 und der zweiten Positionsmesseinrichtung 13 sich anziehende Magnetkräfte auftreten, die eine axiale Fixierung der zweiten Positionsmesseinrichtung 13 zum Zylinder 3 bewirken.

Axial versetzt zu dem zylinderseitigen Magnetfeld 19 mit unterschiedlicher Polung zu dem Magnetfeld 17 der zweiten Positionsmesseinrichtung 3 können noch zusätzliche zylinderseitige Magnetfelder 21; 23 bzw. mit gleicher Polung wie das Magnetfeld 17 der zweiten Positionsmesseinrichtung 13 angeordnet sein, deren Abstoßungskräfte zusätzlich die axiale Position der zweiten Positionsmesseinrichtung 13 zum Zylinder 3 sichern.

Aus der Zusammenschau der Figuren 1 und 2 ist ersichtlich, dass das Schutzrohr einen Deckel 25 aufweist, der sich axial parallel zum Kanal 15 für die zweite Positionsmesseinrichtung 13 erstreckt. Der Deckel 25 ist auf der äußeren Mantelfläche des Schutzrohres 7 ausgeführt, so dass der Kanal 15 für die zweite Positionsmesseinrichtung 13 über den demontierten Deckel 25 zugänglich und damit die zweite Positionsmesseinrichtung 13 besonders einfach montierbar ist.

Das Schutzrohr bzw. das Halteelement 7 weist am oberen Ende des Kanals 15 einen axialen Anschlag 27 auf. Dieser Anschlag 27 dient im Falle von einem zusätzlichen gleichpoligen Magnetfeld des Ringes 21 dazu, die bereits im Kanal 15 befindliche zweite Positionsmesseinrichtung 13 über die Abstoßungskräfte hinauszubewegen, wenn das Schutzrohr 7 bei der Montage des Kolben-Zylinderaggregates 1 an der Kolbenstange 5 befestigt wird. Hat das Schutzrohr 7 seine vorgesehene Montageposition erreicht, dann halten die zylinderseitigen Magnetkräfte der Ringe 19; 21; 23 die zweite Positionsmesseinrichtung 13 stets an einer definierten Axialposition zum Zylinder 3. Die axiale Relativbewegung des Schutzrohres 7 zum Zylinder 3 wird über die Magnetkräfte zwischen den Ringen 19; 21; 23 und dem Magnetfeld 15 an der zweiten Positionsmesseinrichtung 13 auf diese übertragen, so dass das PositionsMess-System 9 ein verwertbares Positionssignal zur Verfügung stellt, obwohl keine mechanische Verbindung zwischen dem Zylinder 3 und dem Schutzrohr 7 besteht.

## Patentansprüche

1. Sensorhalterung für ein Kolben-Zylinderaggregat (1) mit einem Zylinder (3) und einer dazu beweglichen Kolbenstange (5), umfassend ein Halteelement (7), das eine synchrone Bewegung mit der Kolbenstange (5) ausführt und eine erste Positionsmesseinrichtung (11) trägt, wobei eine zweite Positionsmesseinrichtung (13) über eine Halterung (15) axial ortsfest zum Zylinder (3) gehalten wird und zwischen der ersten und der zweiten Positionsmesseinrichtung (11; 13) eine verdrehorientierte Einbaulage besteht, **dadurch gekennzeichnet,**
**dass** die zweite Positionsmesseinrichtung (13) axial gleitend an dem Halteelement (7) angeordnet ist, wobei die zweite Positionsmesseinrichtung (13) magnetische Eigenschaften aufweist, die mit mindestens einem zylinderseitigen Magnetfeld (19) unterschiedlicher Polung zusammenwirken, so dass die sich anziehenden Magnetkräfte eine axiale Fixierung der zweiten Positionsmesseinrichtung (13) bewirken, wobei die zweite Positionsmesseinrichtung (13) in einem geschlossenen Kanal (15) des Halteelements (7) gleitend gelagert ist und das Halteelement von einem Schutzrohr (7) für die Kolbenstange (5) gebildet wird, wobei das Schutzrohr (7) einen Deckel (25) aufweist, über den die zweite Positionsmesseinrichtung (13) montierbar ist.

2. Sensorhalterung nach Anspruch 1,
**dadurch gekennzeichnet,**
**dass** axial versetzt zu dem zylinderseitigen Magnetfeld (19) mit unterschiedlicher Polung zu dem Magnetfeld (17) der zweiten Positionsmesseinrichtung (13) mindestens ein weiteres zylinderseitiger Magnetfeld (21; 23) mit gleicher Polung wie das Magnetfeld (17) der zweiten Positionsmesseinrichtung (13) angeordnet ist.

3. Sensorhalterung nach Anspruch 1,
**dadurch gekennzeichnet,**
**dass** das zylinderseitige Magnetfeld von mindestens einem Ring (19; 21; 23) erzeugt wird.

4. Sensorhalterung nach Anspruch 1,
**dadurch gekennzeichnet,**
**dass** das Halteelement (7) für die erste Positionsmesseinrichtung (11) einen axialen Anschlag (27) für die zweite Positionsmesseinrichtung aufweist.

5. Sensorhalterung nach Anspruch 1,
**dadurch gekennzeichnet,**
**dass** sich der Deckel (25) axial parallel zum Kanal (15) für die zweite Positionsmesseinrichtung (13) erstreckt.

6. Sensorhalterung nach Anspruch 5,
**dadurch gekennzeichnet,**
**dass** der Deckel (25) an einer äußeren Mantelfläche des Schutzrohres (7) ausgeführt ist.

## Claims

1. Sensor holder for a piston/cylinder unit (1) having a cylinder (3) and a piston rod (5) which can move in relation to the said cylinder, comprising a holding element (7) which executes a synchronous movement with the piston rod (5) and is fitted with a first position-measuring device (11), wherein a second position-measuring device (13) is held in an axially stationary manner in relation to the cylinder (3) by means of a holder (15) and a rotationally oriented installation position is produced between the first and the second position-measuring device (11; 13), **characterized in that** the second position-measuring device (13) is arranged so as to slide axially on the holding element (7), wherein the second position-measuring device (13) has magnetic properties which interact with at least one cylinder-side magnetic field (19) with a different polarity, so that the attracting magnetic forces axially fix the second position-measuring device (13), wherein the second position-measuring device (13) is mounted so as to slide in a closed channel (15) in the holding element (7) and the holding element is formed by a protective tube (7) for the piston rod (5), wherein the protective tube (7) has a cover (25) by means of which the second position-measuring device (13) can be fitted.

2. Sensor holder according to Claim 1, **characterized in that** at least one further cylinder-side magnetic field (21; 23) with the same polarity as the magnetic field (17) of the second position-measuring device (13) is arranged in an axially offset manner in relation to the cylinder-side magnetic field (19) with a different polarity to the magnetic field (17) of the second position-measuring device (13).

3. Sensor holder according to Claim 1, **characterized in that** the cylinder-side magnetic field is generated by at least one ring (19; 21; 23).

4. Sensor holder according to Claim 1, **characterized in that** the holding element (7) for the first position-measuring device (11) has an axial stop (27) for the second position-measuring device.

5. Sensor holder according to Claim 1, **characterized in that** the cover (25) extends axially parallel to the channel (15) for the second position-measuring device (13).

6. Sensor holder according to Claim 5, **characterized in that** the cover (25) is designed on an outer casing surface of the protective tube (7).

## Revendications

1. Fixation de capteur pour un agrégat de cylindre à piston (1) équipé d'un cylindre (3) et d'une tige de piston (5) mobile par rapport à lui, comprenant un élément de maintien (7) réalisant un mouvement synchrone avec la tige de piston (5) et supportant un premier dispositif de mesure de position (11), un deuxième dispositif de mesure de position (13) étant maintenu fixement sur place dans le plan axial par rapport au cylindre (3) par le biais d'une fixation (15) et une position de montage orientée en torsion étant prévue entre le premier et le deuxième dispositif de mesure de position (11 ; 13), **caractérisée en ce que** le deuxième dispositif de mesure de position (13) est disposé de façon à pouvoir glisser dans le plan axial contre l'élément de maintien (7), le deuxième dispositif de mesure de position (13) présentant des propriétés magnétiques interagissant avec au moins un champ magnétique (19) situé côté cylindre présentant une polarisation différente, de sorte que les forces magnétiques s'attirant provoquent une fixation axiale du deuxième dispositif de mesure de position (13), le deuxième dispositif de mesure de position (13) étant disposé de façon à pouvoir glisser dans un canal (15) fermé de l'élément de maintien (7) et l'élément de maintien étant formé par un tube de protection (7) de la tige de piston (5), le tube de protection (7) comportant un couvercle (25) au-dessus duquel le deuxième dispositif de mesure de position (13) peut être monté.

2. Fixation de capteur selon la revendication 1, **caractérisée en ce qu'**au moins un champ magnétique (21 ; 23) situé côté cylindre supplémentaire présentant la même polarisation que le champ magnétique (17) du deuxième dispositif de mesure de position (13) est disposé de façon décalée dans le plan axial par rapport au champ magnétique (19) situé côté cylindre présentant une polarisation différente du champ magnétique (17) du deuxième dispositif de mesure de position (13).

3. Fixation de capteur selon la revendication 1, **caractérisée en ce que** le champ magnétique situé côté cylindre est produit par au moins un anneau (19 ; 21 ; 23).

4. Fixation de capteur selon la revendication 1, **caractérisée en ce que** l'élément de maintien (7) du premier dispositif de mesure de position (11) comporte une butée axiale (27) pour le deuxième dispositif de mesure de position.

5. Fixation de capteur selon la revendication 1, **caractérisée en ce que** le cache (25) s'étend parallèlement, dans le plan axial, au canal (15) du deuxième dispositif de mesure de position (13).

6. Fixation de capteur selon la revendication 5, **caractérisée en ce que** le cache (25) est réalisé au niveau d'une surface d'enveloppe extérieure du tube de protection (7).
